# EUROPEAN PATENT SPECIFICATION

(11) **EP 0 746 730 B1**
(45) Date of publication and mention of the grant of the patent: **11.06.2003**
(21) Application number: 94926358.6
(22) Date of filing: 23.08.1994
(51) Int. Cl.: F24J 2/12

(54) **SOLAR POWER PLANT FOR THE PRODUCTION OF ELECTRIC POWER AND/OR HYDROGEN**
SONNENKRAFTANLAGE ZUR ERZEUGUNG VON STROM UND/ODER WASSERSTOFF
CENTRALE SOLAIRE PRODUISANT DE L'ELECTRICITE ET/OU DE L'HYDROGENE

(30) Priority: 23.08.1993 HU 9302394
(43) Date of publication of application: 11.12.1996
(73) Proprietor: GÖDE, Gábor, 1126 Budapest (HU)
(72) Inventor: GÖDE, Gábor, 1126 Budapest (HU)
(74) Representative: Farago, Peter Andreas, Dipl.-Ing.
(86) International application number: HU9400035
(87) International publication number: WO95006846

(56) References cited:
- WO-A-79/01004
- FR-A- 2 404 815
- FR-A- 2 497 927
- US-A- 4 256 088
- US-A- 4 285 667
- US-A- 4 423 926
- US-A- 4 608 964

## Description

The subject of the invention is a solar power plant for the production of electric power and/or hydrogen, provided with a parabolic collector with a receptor in its focus, fixed in a manner enabling its free rotation at least in two directions around the shaft at the convex sioe,with double shell structure, composed of arched segments clamped into a grated frame structure adjustable to follow the direction of sunsnine, furnished with supporting-moving elements where it contains a heat receptor and is connected with a power conversion and storage unit.

As far as environment protection is concerned, solar energy utilization resp. its conversion into other kinds of energy which can be conducted to greater distances, seem to be perhaps the most favourable method for power generation.

There are several solutions for large-scale utilization of solar energy. The essence of the photoelectric (photovoltatic) process is electric current generation under the effect of sunshine in solar elements acting as semi-conductors. The possibility of direct current generation is the advantage of the system. Its disadvantage is based in the solar elements made of silicium monocrystals resp. less effective polycrystals, which seem to be expensive and are not suitable for mass production, thus it is not competitive as far as large-scale power generation is concerned.

In case of flat collectors a cycle will be produced by means of the heating of water in a pipe system mounted in the fixed, flat receiving screens directly exposed to sunshine, where the heated water will pass its thermal energy in a heat-exchanger and the freon evaporated there will generate current in a turbo-generator.

The peak value of the efficiency of solar energy conversion is appr. 9 - 17 % in case of these systems. The importance of solar energy concentrating equipment is based on the high temperature which can be reached by means of the optical concentration of solar energy with a theoretical upper limit of 6000°C. Even 2800°C has been reached in experimental establishments. Concentration can be realized by the sun following moving of the collectors.The main types of sunshine collecting (concentrating) euipment are the parabolic, cylindrical parabolic collectors, the spnerical mirrors and the Fresnel type lenses. Compared to systems utilizing flat collectors, these ones are more profitable since they will be more efficient due to the concentration and tne temperature of the thermal source. Better thermodynamic utilization of heat energy results in higher specific mechanic output.

However, apart from the several advantages offered by solar power stations operating on basis of the Fresnel principle, they have a disadvantage too: due to their large space demand (3 - 7 sq.km) the distance between the heat reception column and the heliostat will be considerable (max. 2 - 3 km).

The intensity of heat- and light rays reflected from the mirrors will be considerably reduced by the air temperature, the air circulation as well as the shielding effect of the dust particles floating in the air. As the focussed rays pass, the air will act as an energy absorbing, heating agent to a certain extent which effect will increase at a highly increased rate as the distance is increased. The majority of the investment cost will fall to the tanks serving for heat storage, the expensive condensation equipment and the column.

There is another disadvantage of these kinds of solar power stations: since the sun following movement of the heat reception column, installed in the center of the heliostat field, cannot be solved, in case of the majority of the mirrors, when they are set in to follow sunshine, due to the fix position of the column the utilized sunshine will be far from the value which would otherwise be offered by the actual surface of the mirrors, contrary to sun following parabolic mirrors with a body of rotation where the mirror surface can be utilized at a far higher efficiency.

Further disadvantage of the former units is their being generally located in deserts where there is no sufficient quantity of water for condensation and heat extraction (condensation) is performed by means of air cooling requiring considerable electric power and is less effective too.

The USA patent with a registration numer of 4 608 964 describes a sunshine collecting, extended mirror which is composed of segments forming a parabolic surface coated with reflecting material at the internal side with a circular hole at the middle. The heat-exchanger column mounted in this hole is fixed to the ground. Lifting, lowering of the parbolic mirror are performed by span ropes, hurled over pulleys, connecting to the circular orifice. The disadvantage of this solution is that the mirror collecting sunbeams (the collector) is movable in vertical direction only, thus its sun following movement is impossible.

The European patent with a registration number of 0 170 610 describes a parabolic mirror which can be composed of several pieces in case of which reflecting plates cover the internal surface of the parabolic structure made of racially placed arched rib elements and radial and transverse laths connecting and covering the radial rib elements. Though in case of this solution local installation is possible, however, as soon as the unit is installed, there is no further possibility for the accurate adjustment of the direction of the reflecting plates, resp. the direction cannot be modified any more.

The UK patent with a registration number of 2 060 926 describes a solar energy utilization euipment, in case of which the collector is placed on a supporting column by means of a ball-and-socket shaft at the convex side, where the column is fixed to the gound and the moving of the collector is performed by two structures with one end fixed to the orifice of the parablic mirror with the other one to the ground. This solution fails to offer protection against wind load. It is impossible to move the parabolic mirror of a relatively large surface, in horizontal direction, in the plane of the ground surface.

Further solar utilization equipment is known from US-A-4 256 088, FR-A-2 404 815, US-A-4 423 926, US-A-4 285 667 and FR-A-2 497 927.

My invention is aimed at the elimination of the disadvantages characterizing the well-known solutions by means of an equipment as defined in claim 1. Further advantageous features of the invention are set forth in the dependent claims.

According to the invention there is provided an equipment containing a parabolic collector with a receptor in its focus, fixed in a manner enabling its free rotation at least in two directions around the shaft at the convex side, with double shell structure, composed of arched segments clamped into a grated frame structure adjustable to follow the direction of sunshine, furnished with supporting-moving elements where it contains a heat receptor and is connected with a power conversion and storage unit.

The invention is based on the principle that the supporting and moving structure of a parabolic collector of large size (100 - 300 m dia.) can be more simply constructed if the collector is a light structure one, and the delivery and location can be solved easily if the structure is composed of panel modules to be installed on site. Location of the parabolic collector onto water means further advantages for the supporting and moving structure. In case of location on water the cooling agent for condensation will be available in an unlimited quantity.

In case of the equipment covered by the invention the supporting-moving elements are represented by telescopic elements which can be turned in each direction, connecting to the collector at equal distance from each other along a circular ring being in parallel plane with the orifice of the collector, with their other end connecting to a base also in a turnable manner in each direction, surrounding a telescopic main support fixed to the base at the lower end, supported by a ball-and-socket joint unilinearly with the rotation axis of the collector. The telescopic elements and the telescopic main support are preferably of hydraulic operation. At the external surface of the collector there is a second body of rotation - preferably hemisphere or a calotte with a smaller surface compared to the latter - designed in an axially symmetrical manner, where in the area surrounded by the collector and the calotte there is a reinforcing structure, while the telescopic main support is connected to the calotte in the common centreline of the calotte and the collector. It is preferable to equip the telescopic main support ana the telescopic elements with a hydraulic control unit which is connected to an electronic control system.

Une construction type of the collector is placed in a pit under ground level lined with concrete shell so, that in basic position the orifice parallel with the horizon is above the ground level.

As another alternative, the collector is located onto water surface of regulated level so, that the base is under the water surface, while the collector orifice is above the same in each position. The collector is preferably provided with air bags divided into spaces separated from each other by means of partition walls, at the external, eastern and western sides. The water surface of regulated level is surrounded by a barrier with sluices and wind baffle elements thereon, where the wind baffle elements are connected to the barrier in a fix manner, or by means of a telescopic moving element.

More solar collectors forming a power plant can also be located onto the water surface of regulated level surrounded by a barrier provided with sluices. This alternative is preferably provided with a low position water reservoir in a height under high tide level and with an upper position one in case of natural water surface.

The elements of the heat receiving and energy conversation system can be located in the receptor while the heat storage tanks with heat insulating coat can be be placed in the calotte. In case of another alternative the heat reception unit is placed in the receptor while the elements of the energy conversion system and the heat storage tanks are placed in the calotte so, that the elements of the energy conversion system are placed onto a supporting structure connected to the calotte by means of telescopic moving elements, in a container provided with dampers suspended at both sides at its part above the centre of gravity.

In case of a further alternative the units of the energy conversion system and the heat storage tanks are placed onto a supporting structure standing above water surface by the collector, where steam generating and heat storage tanks are connected with the receptor placed in the focus of the collector by means of flexible pipeline with multiple insulation, delivering the heat carrying agent. The energy conversion system, if the Brayton gas cycle is used, consists of the condenser, preheater, gas heater and turbogenerator units, while in case of another alternative it consists of units applying liquid sodium as the transmitting agent: steam generator, turbogenerator, condenser, feed water supplying, and if required, heat storage units, in case of which the condenser can be connected with a sea-water desalinizing equipment. In given case, the equipment can be provided with hydrogen production system, in parallel with the energy conversion system, or instead of it.

The collector is constructed from arched units consisting of a rib-frame made of double, arched rib elements. The external and internal rib-frames are connected by means of distance panel pieces, furthermore, the space surrounded by the double, arched rib-elements and the distance panel pieces is filled with a multi-layer grate structure with connecting elements fixing the layers to each other. At the external part the grate structure is closed by casette elements fitted to the orifice of the rib-elements rasp. the grate structure, while the edges of the casette elements and the surface of the connecting elements are closed by means of flexible plastic strips glued at one side. Preferably, the raw material of the casette elements is artificial resin reinforced with textile glass and should be fixed to each other by glue. At the internal part, at the concave side, the collector is covered oy reflecting plates directing towards the focus, preferably made of aritficial resin raw material, reinforced with textile glass, and are clamped at the internal surface of the collector by means of adjustable spring screw fixing units through bores made in the rib elements.

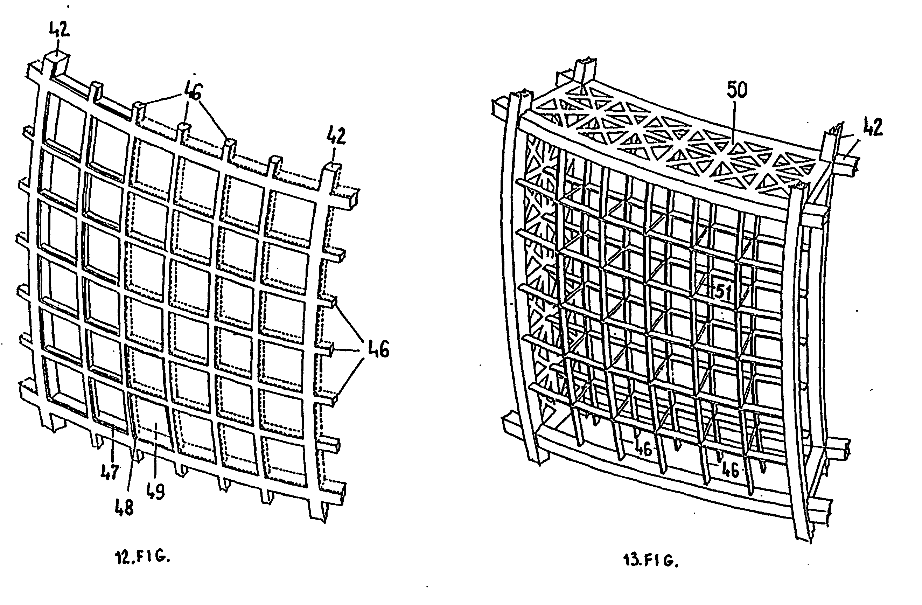

The attached drawings give a detailed information about the different types of the invention, described as an example:
- Figure 1.: The equipment covered by the invention is located in a pit under the ground
- Figure 2.: The equipment covered by the invention is located on water surface
- Figure 3.: Top view of the air bags applied for the equipment shown in Figure 2.
- Figure 4.: Sketch showing the location of the equipment covered by the invention located onto water surface, provided with a barrier
- Figure 5.: A possible construction of the barrier provided with fix wind baffle elements as applied in case of the alternative described in Figure 4.
- Figure 6.: Another possible construction of tne barrier provided with hydraulically moved wind baffle elements.
- Figure 7.: Sketch of a power plant constructed of the equipment covered by the invention together with water reservoir, as energy storage system.
- Fiyure 8.: Section of the calotte applied for the equipment covered by the invention with the energy conversion and storage tanks placed therein in vertical position
- Figure 9.: Section of the calotte applied for the equipment covered by the invention with the energy conversion and heat storage tanks in angle position
- Figure 10.: Sketch of the layout and connection of the energy conversion units placed in a container according to the type shown in Figure 9.
- Figure 11.: Construction of the internal surface of the collector applied for the equipment according to the invention.
- Figure 12.: Single-layer, external grate structure forming the collector, with the convex plates at the external surface, fixed to the orifice of the grate structure, serving for water-tight coat.
- Figure 13.: Rib-frame filled with double walled, multi-layer grate structure reinforcing the collector.

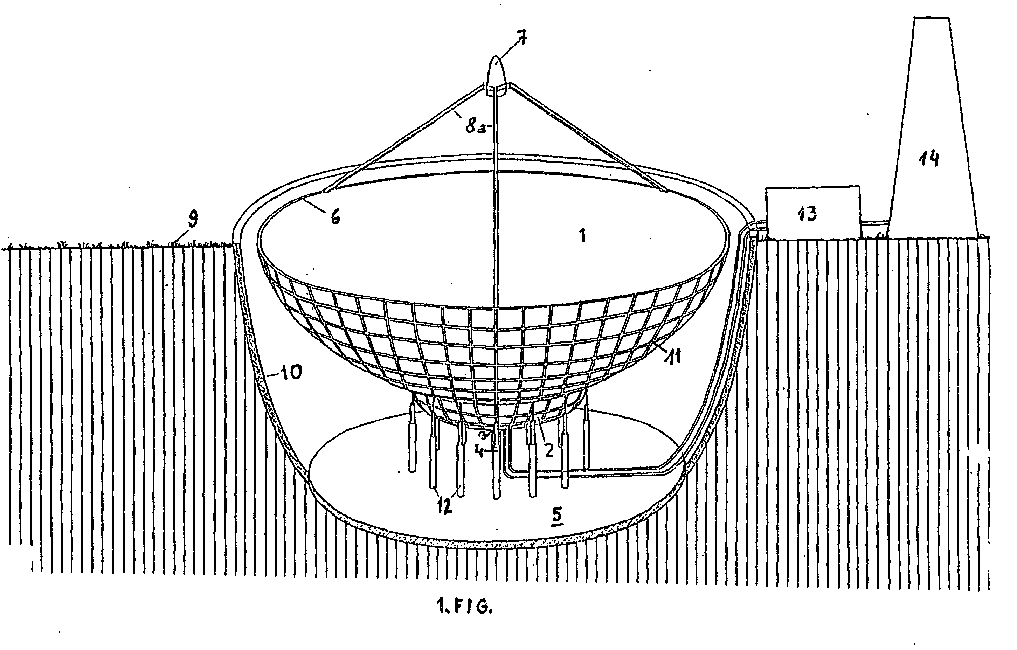

Figure 1. shows the alternative placed in a pit under ground level, in lowered position. The collector 1 indicated by the Figure is provided with a calotte 2 at the bottom. A telescopic main support 4 is connected to the calotte 2 at the bottom, hydraulically operated by means of a ball-and-socket joint 3. The bottom end of the telescopic main support 4 is fixed to the base 5. Furthermore, three supports 82, protruding towards the focus, fixing the receiver 7 in the focus, are connected to the orifice 6 of the collector 1. If located in a dry land area, rich in sunshine, e.g. in a desert, the equipment is placed in a pit with concrete lining 10, constructed under ground level 9 the size of which considers the moving of the equipment, and is provided with an orifice protruding above ground level. During operation, the orifice 6 of the collector 1 parallel with the horizon is above the ground level 9. A frame structure 11 forms the external mantle of the collector 1. Thereto, at least three, preferably nydraulically operated telescopic elements 12 will oe connected, turnable in each direction, placed in equal distance from each other along the circular ring being in parallel plane with the orifice 6. The telescopic elements 12, at their bottom end, are connected to the base 5 also in a turnable manner in each direction, placed in equal distance from each other. So that the influence line of the load coincide with the centreline of the piston rod, the moving elements 6 are provided with ball-and-socket joint at both ends. Limiters provide for the required lateral motion of the ball-and-socket joints. The energy conversion unit 13 is placed about the ground level 9, outside the pit, and is connected with the collector 1 and the receiver 7 placed in the middle of the latter by means of a pipeline. The cooling column 14 serving for condensator cooling is placed by the energy conversion unit 13. It is practicable to cover the surface of the sand layer around the pit by low plants, binding the sand and to apply sand catching nets and to cover the area with engineering structures.

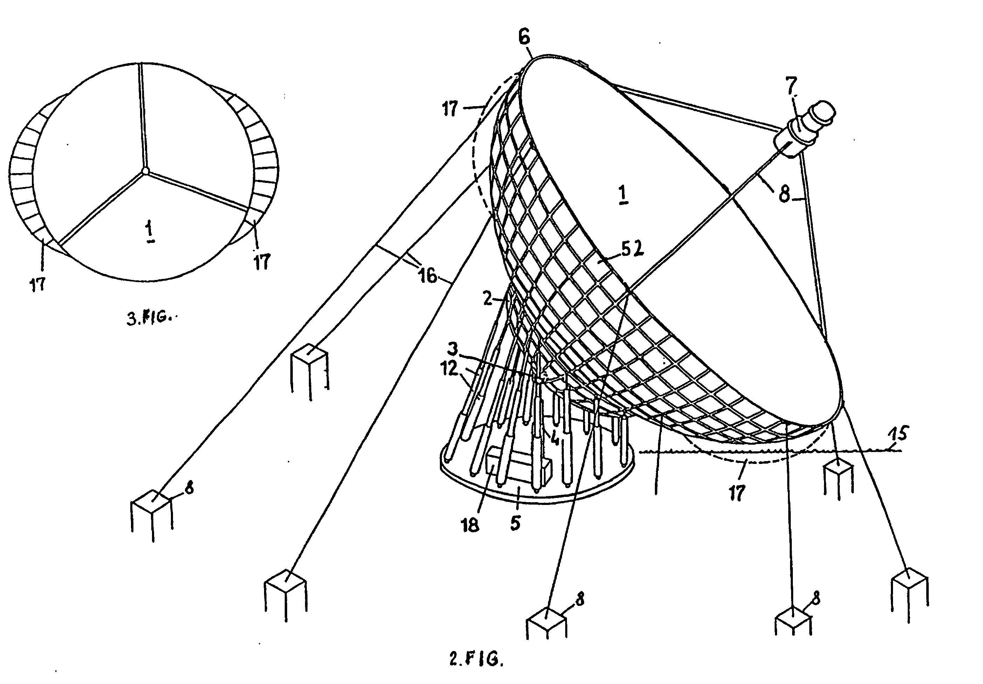

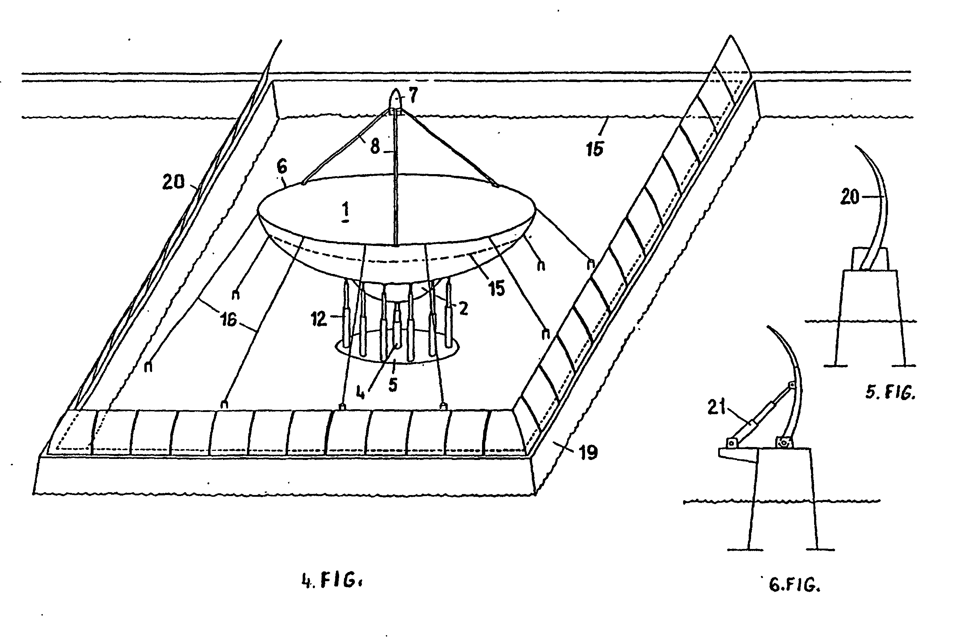

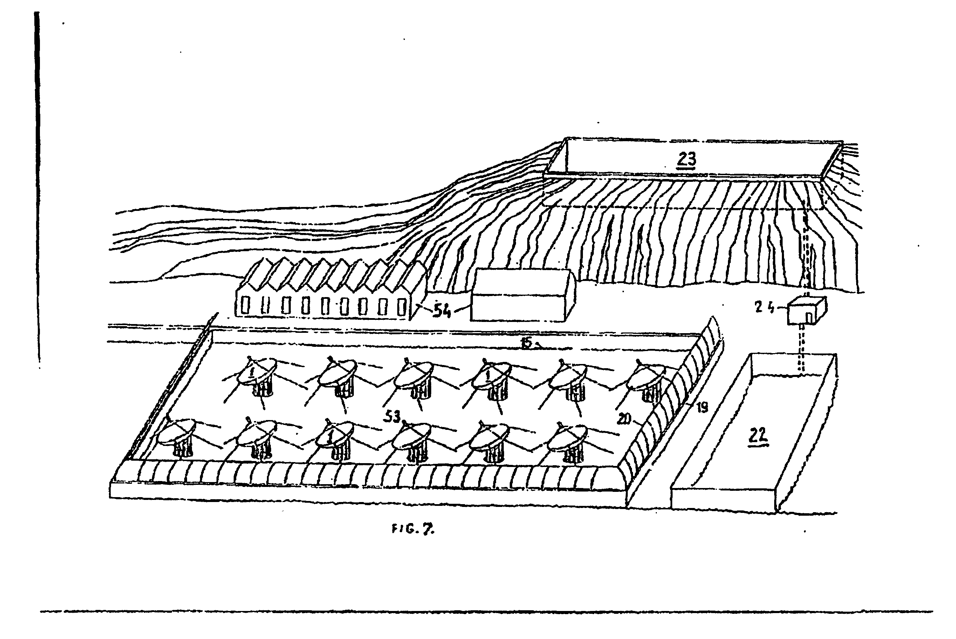

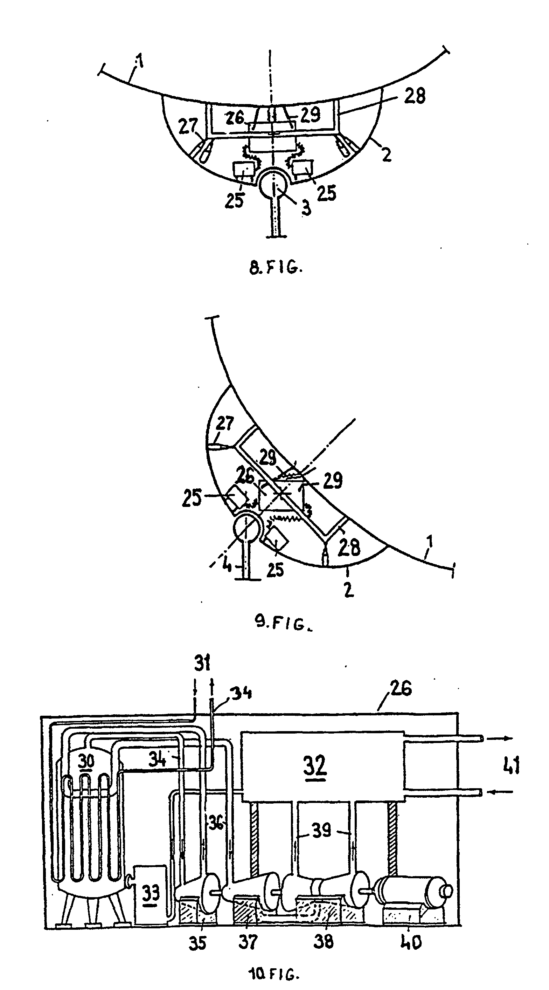

Figure 2. shows the alternative of the invention where the equipment is located onto water surface. In this case the collector 1 is located on water surface 15 of regulated level so, that the base 5 is under the water surface 15 while the orifice 6 of the collector 1 is in each case above the water surface 15. Span ropes 16 provided with tightening structure are fixed to the structurally reinforced orifice 6 of the collector 1. The other end of the span ropes is fixed to legs 8. The collector 1, at the external part is provided with air bags 17, divided into spaces separated from each other by partition walls, at the eastern and western sides. The hydraulic control unit 18 is also placed on the base 5 or on the stand above water level. Figure 3 shows the top view of the layout of the air bags 17.

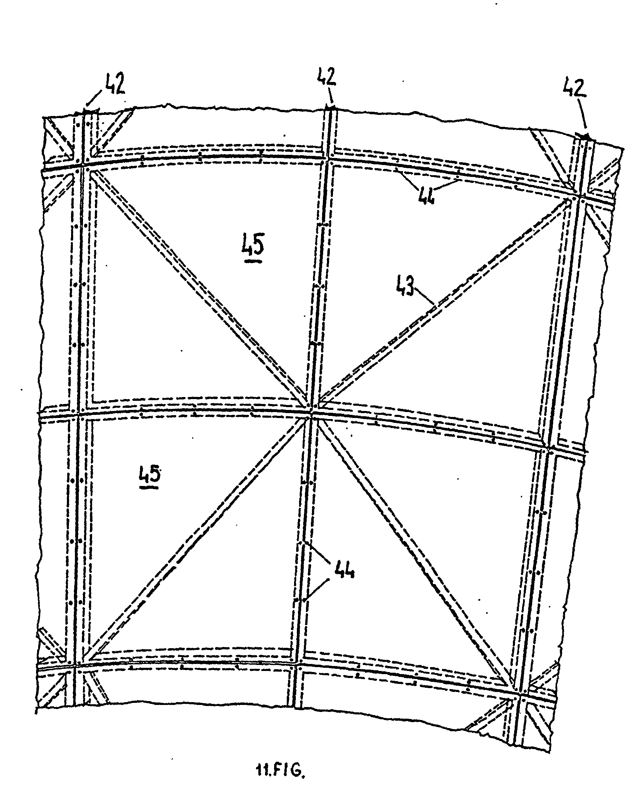

Figure 4. indicates a construction located onto the water surface where the water surface 15 of regulated level is surrounded by a barrier 19 provided with sluices and wind baffle elements 20 placed thereon. In case of the alternative in Figure 5. the wind baffle elements 20 are connected to the barrier 19 in a fix manner, while in case of the alternative in Figure 6. they join thereto by means of a telescopic moving element 21. Figure 4. indicates the basic position of the collector 1 when its orifice 6 is in horizontal plane. This position should be set in when there is standstill from sunset to sunrise, or when, due to a small storm the wind load does not exceed yet the allowed value. Inundation of the collector 1 with water by means of lowering offers the possibility of its safe protection in case of tropic cyclones or storms approximating their wind force. Instruments will control the height of the water of regulated level belonging to the solar power plant. The required water level will be set by means of sluice opening resp. pumping as required.

Figure 7. shows a power plant constructed from collectors 1 covered by the invention, operated with water reservoirs serving for energy stores. In case of sea water, the protecting barrier should be constructed to be as high as to exceed the height of the max. water level during high tide and that of the billows as well. For water energy storage,a lower reservoir 22 with a sluice is constructed which is lower by appr. 1,5-2 m than the highest water level at the time of high tide (considering the bottom level of the reservoir), wherefrom the stored water can be pumpea into the upper reservoir 23. Water is filled into the lower reservoir 22 during high tide by means of sluice lifting. During hours when there is no sunshine, resp. there is peak load the water collected in the upper reservoir will be outlet into the lower one through turbines driving the generators 24 of the power plant, therefrom, preferably, during ebb tide, through further generator driving turbines, into the sea.

In case of the alternative shown in Figures 8. and 9. the space between the collector 1 and the calotte 2 is braced by means of a reinforcing structure. The thermal energy storage tanks 25 with insulated wail, providing for short time energy store and the container 26 bearing the energy conversion units are placed in this braced space. In order to make the equipment of the energy conversion system independent of the sun following motion of the collector, the container 26 is suspended above its gravity centre at one side preferably by means of hydraulically operated telescopes 27, at the other side by means of fix supporting legs to the brace 28 connected to the calotte 2. The container 26 joins to the brace 28 connecting to the frame structure of the collector 1 by means of dampers 29.

The container 26 suspended above its gravity centre, thus also the energy conversion units placeo therein, are always in horizontal position. This is provided by the suspension in eastern-western direction, while in northern-southern direction the telescopes 27 serve for this purpose. Dampers 29 will hinder resonance and possible oscillation of the container 26 when the collector 1 is quickly moved. The spiral, flexible pipelines in-and outlet from the container are provided with adequate thermal insulation.

Figure 10. indicates the layout of the energy conversion units in the container 26. Transmitting agent lines 31 , passing through the steam generation unit 30, as heat-exchanger, are conducted into the container 26. A feed water supply tank 33 provided with a pump connected with the condenser 32 joins to the steam generator 30. The steam generator 30 is connected to the 35 high-pressure steam turbine by means of the primary steam line 34, while to the medium-pressure steam turbine 37 - by means of the steam re-heating secondary steam line 36. The steam line of the medium-pressure turbine 37 is conducted into tne low-pressure turbines 38, wherefrom the expanded steam gets into the condenser 32 through the pipelines 39. A generator 40 joins to the steam turbines with common rotation axis. The flexible pipeline 41 delivering the cooling agent serving for the cooling of the condenser 32 is also passed through the container 26.

In the steam generator 30 the hot sodium, as the transmitting agent, will evaporate the water and over-heats the produced steam. From the steam generator 30 the over-heated steam, preferably at 538°C, enters the nigh-pressure steam turbine 35 for expansion.
Therefrom the steam, in a re-heater - which will be heated by the tapped steam of the high-pressure turbine 35, or the heat-exenanger (steam generator) installed into the sodium cycle - is heated to the required temperature, then the re-neated steam operates the medium-pressure steam turbine 37. The exhaust steam of the latter will be expanded to condensation pressure by the low-pressure steam turbines 38. The exhaust steam of the low-pressure steam turbines 38 will condensate in the condenser 32, therefrom the feed-water will be pumped into the regenerative feed-water pre-heaters, wherefrom the feed water heated to the required temperature is returned by pumping into the steam generator 30, which closes the steam cycle. The turbines drive a current generator.

A small portion of the produced current will serve for the operation of the system, the majority of the same will be fed into the electric network and/or used for nydrogen production. During the period of peak production, a part of it will operate the pump of the energy store.

Figure 11. shows the design of the internal surface of the collector 1 applied in the equipment covered by the invention. The arched structural elements, required for the construction of the collector 1 are made of multi-layer epoxy-resin, preferably reinforced by textile glass. Vertical and norizontal ribs, composed of arched rib-elements 42, fixed to each other by pivoted joint and glue, form the frame structure of the collector 1. Diagonal braces 3 reinforce the net-like internal rib-frame. At the internal surface of the ribs 42 there are bores 44 at regular intervals, in perpendicular position. For coating the trapezoid-like surface formed by the ribs 42 intersecting each other at right angle there are reflecting plates 45 made of artificial resin preferably reinforced by textile glass, with reflecting surface of high efficiency, with concave internal surface, ranging as far as the centreline of the ribs 42. The plates are fixed at the bores 44 by means of adjustable spring screw joints.

Figure 12. shows one of the arched fields forming the collector 1 and the calotte 2 where the trapezoid-like surface surrounded by rib elements 42 is filled with one-layer grate structure 46. In case the unit is located onto water, the arched partial fields of the grate structure 46 which are of trapezoid form too, are covered at the external part by water-proof coat. The water-proof coat consists of casette elements 49 glued onto the orifices 47 at the edge of the grate structure 46, insulated also by plastic strips 48 applied at the places of gluing. The casette elements 49 are fitted into the orifices 47 of the rio elements 42 and are covered by means of plastic strips 48.

Figure 13. indicates a section of the collector constructed of a rib-frame filled with multi-layer, double-walled grate structure. In case of this alternative the external and internal rib-frames are connected by distance panel pieces 50, while the different layers of the multi-layer grate structure 46 are connected by jointing elements 51 constructed of a pipe provided with transversal cuts at the ends.

The central computer program considering the geographical coordinates, the calendar days and the daily schedule per year, as well as the signals given by the photodiodes mounted in pair onto the upper orifice of the collector in both eastern-western and northern-southern directions will serve for the orientation of the collector covered by the invention.

The hydraulic system is most suitable if it is of closed cycle, variable flow and direction, synchronized operation, suitable for slow/quick, continuous speed control, controlled by route switches, operated by working cylinders of single operation connected in parallel and is provided with brake-switch. If the collector is located on water, the supporting and moving structures constructed from hydraulic working cylinders are provided with water-proof, sleeved coat.

The data store of the central computer covers a program considering the geographical situation (geographical coordinates), each day of the calendar year with the starting and the end of the working period with a detailed schedule (section of the day, hour, minute). Un basis of this program elaborated preliminarily for the calendar year the computer will select and start every morning the operation program for the given calendar day. Should it be required (e.g. in case of clouding in the morning for a longer time, rain, etc.) the automatic program control can be changed-over to manual control.

Also the computer will be used for the orientation of the parabolic collector into horizonal basic position in case of storm or if the wind load exceeds the allowed value, or into a position opposite to sunshihe if there is an operating trouble, and for the inundation of the collector, if required, by means of lowering

The high-capacity computer with great storage capacity performs the control, monitoring and checking of the solar energy utilization power plant as required for automatic operation thus providing for the self-regulation of the system.

The computer is in connection with a high-accuracy clock, a wind gauge and other instruments, as well as each unit of the solar power plant. Tnere is a stand-by computer too,which automatically takes over all the control and operation functions of the damaged computer in case of an operating trouble.

Due to its location and other favourable possibilities the equipment covered by the invention can be especially useful for hydrogen production. Accordingly, a hydrogen production system with a transmitting medium, in parallel or instead of the energy conversion system is located. The system can be operated on basis of the e.g. Z. Takehara and S. Yosizawa hybrid electrolysis process, or by means of tne so-called Yokohama cycle. In case of the equipment covered by the invention, part of the sodium warmed up in the receptor will be pumped into the hydrogen production unit, then the cooled sodium will be pumped back into the receptor.

the thermal energy released in the condenser can be utilized further on for furnishing a sea-water desalinization plant with energy. For this purpose the multi-body evaporators of the vacuum system seem to be the most suitable.

There is another alternative where the receptor 7 placed in the focus of the collector 1 holds the energy conversion units of the Brayton-type gas cycle. The main structural parts of this energy convesion equipment are as follows: air condenser, pre-neater, heater and the turbogenerator.

Apart from the advantage of low weight, due to the utilization of light-structure materials, the unit offers further advantages: high strength due to fibre-reinforcement, dimensional accuracy during the production of the elements, permanent, stable joints by means of gluing during local assembly, corrosion-resistance.

the invention solves cheap condensation - which is well-known to be expensive and causes serious problems in case of other power plants - by means of the application of the cooling agent which is available in unlimited quantity if location onto water surface is in question, combined with other energy utilizing solutions (sea-water desalinization or Rankine-cycle).

## Claims

1. A parabolic collector (1) for concentrating solar energy including a receiver (7) in its focus and fixed in a manner enabling its free movement in at least two directions, **characterized in that**
the collector (1) has a double shell structure including arched fields consisting of rib-frames made of double arched ribs (42) connected by means of distance panel pieces (50), the space surrounded by the double arched ribs (42) and the distance panel pieces (50) being filled with a multilayer grate structure (46) with connecting elements (51) fixing the layers of the grate structure (46) to each other.

2. The parabolic collector according to claim 1, **characterized in that** the grate structure (46) is closed by cassette elements (49) fitted to an orifice (47) of the ribs (42) and the grate structure (46), while the edges of the cassette elements (49) and the surface of the connecting elements (51) are closed by means of flexible plastic strips (48) glued at one side.

3. The parabolic collector according to claim 2, **characterized in that** the cassette elements (49) are made of artificial resin raw material reinforced by textile glass, preferably fixed by glue.

4. The parabolic collector according to one or more of claims 1-3, **characterized in that** the collector (1) is covered by reflecting plates (45) at an internal part thereof, preferably made of artificial resin raw material, reinforced with textile glass, the reflecting plates (45) being clamped at the internal surface of the collector (1) by means of adjustable spring screw fixing units through bores (44) made in the ribs (42).

5. The parabolic collector according to one or more of claims 1-4, **characterized in that** the receiver (7) is held by supports (8a) in the focus of the collector (1).

6. The parabolic collector according to one or more of claims 1-5, **characterized in that** the collector (1) is provided with air bags (17) divided into spaces separated from each other by means of partition walls, at the external, eastern and western sides.

7. The parabolic collector according to one or more of claims 1-6, **characterized in that** there is provided a second body of rotation, preferably a hemisphere or a calotte (2), with a smaller surface as compared to the collector (1), the calotte (2) being designed in an axially symmetrical manner at the external surface of the collector (1), where in the area surrounded by the collector (1) and the calotte (2) there is a reinforcing structure, a telescopic main support (4) being connectable to the calotte (2) in the common centerline of the calotte (2) and the collector (1).

8. A Support and moving structure for a parabolic collector (1) according to one or more of claims 1-7, **characterized in that** the structure includes:
a base (5);
a telescopic main support (4) fixed to the base (5) at the lower end and supporting the collector (1) unilinearly with its rotation axis by means of a ball-and-socket joint (3); and
telescopic elements (12), the upper ends of the telescopic elements (12) connecting in a rotatable manner to the collector (1) at equal distance from each other along a circular ring being in a plane parallel to an orifice (6) of the collector (1), the lower ends of the telescopic elements (12) connecting to the base (5) also in a rotatable manner, the telescopic elements (12) surrounding the telescopic main support (4).

9. The structure according to claim 8, **characterized in that** the telescopic elements (12) and the telescopic main support (4) are of hydraulic operation.

10. The structure according to claim 9, **characterized in that** the telescopic main support. (4) and the telescopic elements (12) are provided with a hydraulic control unit (18) which is connected to an electronic control system.

11. The structure according to one or more of claims 1-10, **characterized in that** the collector (1) is placed in a pit located under ground level (9) and lined with a concrete shell (10), so that in the basic position the orifice (6) is parallel with the horizon and is above the ground level (9).

12. The structure according to one or more of claims 1-10, **characterized in that** the collector (1) is located onto a water surface (15) of regulated level, so that the base (5) is under the water surface (15) while the orifice (6) of the collector (1) is above the water surface (15) in each position, the telescopic elements (12) and the main support (4) being provided with respective sleeved, water-proof coats,
the structure further including span ropes (16) provided with a tightening structure, one end of the span ropes (16) being fixed to the structurally reinforced edge of the collector (1), the other end of the span ropes (16) being fixed to legs (8).

13. The structure according to claim 12, **characterized in that** the water surface (15) of regulated level is surrounded by a barrier (19) with sluices and wind baffle elements (20) thereon, where the wind baffle elements (20) are connected to the barrier (19) in a fix manner or by means of a telescopic moving element (21).

14. Use of the parabolic collector (1) in combination with the structure according to one or more of claims 1-13 in a solar power plant for the production of electric power and/or hydrogen including an energy conversion and storage unit (13, 26, 25), the collector (1) being connected to the energy conversion and storage unit (13, 26, 25), **characterized in that**
a heat receiving unit and the energy conversion unit are located in the receiver (7), the heat storage unit including heat storage tanks (25) located in the calotte (2), the storage tanks (25) having a heat insulation coat placed thereon; or **in that**
a heat receiving unit is located in the receiver (7), the energy conversion and the heat storage unit being located in the calotte (2), so that the energy conversion unit is placed on a supporting structure (28) connected to the calotte (2) by means of telescopic moving elements (27) in a container (26) provided with dampers (29) suspended at both sides at its part above the center of gravity; or **in that**
a heat receiving unit is located in the receiver (7), the energy conversion and the heat storage unit being located on a supporting structure standing above the water surface (15) by the collector (1), the heat storage unit including heat storage tanks (25), a steam generator (30) and the heat storage tanks (25) being connected with the receiver (7) placed in the focus of the collector (1) by means of a flexible pipeline with multiple insulation, delivering the heat carrying agent.

15. The invention according to claim 14, **characterized in that** the energy conversion unit consists of air condenser, preheater, heater and turbo-generator units.

16. The invention according to claim 14, **characterized in that** the energy conversion unit consists of equipment applying liquid sodium as transmitting agent, steam generator (30), turbo-generator (35), condenser (32), feed water supplying (33) and if required, heat storage (25) units.

17. The invention according to claim 16, **characterized in that** the condenser (32) is connected to a sea-water desalinizing equipment.

18. The invention according to one or more of claims 14 to 17, **characterized in that** a hydrogen production system (54) is operating in parallel with, or instead of the energy conversion unit.

19. The invention according to claim 14, third alternative, including a plurality of collectors (1) forming a power plant (53) to be located onto the water surface (15) of regulated level and surrounded by the barrier (19) provided with sluices.

20. The invention according to claim 19, **characterized in that** a lower water reservoir (22) is connected to the power plant (53) in a height under the high tide level, and further including an upper water reservoir (23) at higher level than the natural water surface, the upper and the lower reservoirs (23, 22) being connected by pipelines with pumps, the pipelines being further provided with turbines, generators, and outlet pipes.

## Patentansprüche

1. Ein parabolischer Kollektor (1) zur Bündelung von Solarenergie, der einen Empfänger (7) in seinem Brennpunkt einschließt, und in einer Art und Weise befestigt ist, die seine freie Bewegung in mindestens zwei Richtungen gestattet, **dadurch gekennzeichnet, dass**
der Kollektor (1) eine doppelte Schalenstruktur aufweist, die gebogene Felder einschließt, bestehend aus Rippenrahmen, die aus doppelten gebogenen Rippen (42) ausgebildet ist, die mittels Abstandsplattenstücken (50) verbunden sind, wobei der Raum, der durch die doppelten gebogenen Rippen (42) und die Abstandsplattenstücke (50) umgeben ist, mit einer mehrschichtigen Gitterstruktur (46) aufgefüllt ist, wobei Verbindungselemente (51) die Schichten der Gitterstruktur (46) aneinander befestigen.

2. Der parabolische Kollektor gemäß Anspruch 1, **dadurch gekennzeichnet, dass** die Gitterstruktur (46) durch Kassettenelemente (49) geschlossen ist, die in einer Öffnung (47) der Rippen (42) und der Gitterstruktur (46) eingepasst sind, während die Ränder der Kassettenelemente (49) und die Oberfläche der Verbindungselemente (51) mittels flexibler Kunststoffstreifen (48) verschlossen sind, die an einer Seite angeklebt sind.

3. Der parabolische Kollektor gemäß Anspruch 2, **dadurch gekennzeichnet, dass** die Kassettenelemente (49) aus einem Kunst-Harz-Rohmaterial ausgebildet sind, die mit Textilglas verstärkt sind, vorzugsweise durch Ankleben befestigt.

4. Der parabolische Kollektor gemäß einem oder mehreren der Ansprüche 1-3, **dadurch gekennzeichnet, dass** der Kollektor (1) durch reflektierende Platten (45) an einem inneren Teil davon abgedeckt ist, die vorzugsweise aus einem Kunstharz-Rohmaterial ausgebildet sind, der mit Textilglas verstärkt ist, wobei die reflektierenden Platten (45) an einer inneren Oberfläche des Kollektors (1) mittels einstellbarer Federschrauben-Befestigungseinheiten durch Löcher (44) angeklemmt sind, die in den Rippen (42) ausgebildet sind.

5. Der parabolische Kollektor gemäß einem oder mehreren der Ansprüche 1-4, **dadurch gekennzeichnet, dass** der Empfänger (7) durch Träger (8a) im Brennpunkt des Kollektors (1) gehalten wird.

6. Der parabolische Kollektor gemäß einem oder mehreren der Ansprüche 1-5, **dadurch gekennzeichnet, dass** der Kollektor (1) mit Luftkissen (17) ausgestattet ist, die in Räumen aufgeteilt sind, die voneinander mittels Trennwänden an den äußeren, den Ost- und Westseiten getrennt sind.

7. Der parabolische Kollektor gemäß einem oder mehreren der Ansprüche 1-6, **dadurch gekennzeichnet, dass** ein zweiter Rotationskörper bereitgestellt wird, vorzugsweise eine Halbkugel oder eine Kalotte (2), mit einer relativ zum Kollektor (1) kleineren Oberfläche, wobei die Kalotte (2) in einer achsialsymmetrischen Art und Weise an der äußeren Oberfläche des Kollektors (1) ausgebildet ist, worin in einem Bereich, der durch den Kollektor (1) und die Kalotte (2) umgeben ist, eine Verstärkungsstruktur vorhanden ist, wobei ein teleskopischer Hauptträger (4) mit der Kalotte (2) an der gemeinsamen Mittellinie der Kalotte (2) und des Kollektors (1) verbunden werden kann.

8. Eine Träger- und Bewegungsstruktur für einen parabolischen Kollektor (1), gemäß einem oder mehreren der Ansprüche 1-7, **dadurch gekennzeichnet, dass** die Struktur folgendes einschließt:
eine Basis (5);
einen teleskopischen Hauptträger (4), der an einem unteren Ende zur Basis (5) befestigt ist, und der den Kollektor (1) in eine Linie mit seiner Drehachse mittels eines Drehgelenks (3) stützt; und
teleskopische Elemente (12), wobei die ersten Enden der teleskopischen Elemente (12) in einer drehbaren Weise mit dem Kollektor (1) in gleichen Abständen voneinander entlang eines kreisförmigen Rings verbunden sind, der in einer Ebene parallel zu einer Öffnung (6) des Kollektors (1) befindlich ist, wobei die zweiten Enden der teleskopischen Elemente (12) mit der Basis (5) ebenfalls in einer drehbaren Art und Weise verbunden sind, wobei die teleskopischen Elemente (12) den teleskopischen Hauptträger (4) umgeben.

9. Die Struktur gemäß Anspruch 8, **dadurch gekennzeichnet, dass** die teleskopischen Elemente (12) und der teleskopische Hauptträger (4) hydraulisch betätigt werden.

10. Die Struktur gemäß Anspruch 9, **dadurch gekennzeichnet, dass** der teleskopische Hauptträger (4) und die teleskopischen Elemente (12) mit einer hydraulischen Steuereinheit (18) bereitgestellt sind, die an einem elektronischem Steuersystem angeschlossen ist.

11. Die Struktur gemäß einem oder mehreren der Ansprüche 1-(10), **dadurch gekennzeichnet, dass** der Kollektor (1) in einer Grube angebracht ist, die unter der Bodenebene (9) befindlich ist, und mit einer Betonschale (10) ausgekleidet ist, so dass in der grundlegenden Stellung die Öffnung (6) parallel mit dem Horizont ist und über der Grundebene (9) befindlich ist.

12. Die Struktur gemäß einem oder mehreren der Ansprüche 1-(10), **dadurch gekennzeichnet, dass** der Kollektor (1) auf einer Wasseroberfläche (15) mit einem geregelten Pegel befindlich ist, so dass die Basis (5) unter der Wasseroberfläche (15) befindlich ist, während die Öffnung (6) des Kollektors (1) in jeder Stellung über der Wasseroberfläche (15) befindlich ist, wobei die teleskopischen Elemente (12) und der Hauptträger (4) mit jeweiligen mit Ärmeln versehenen, wasserdichten Hüllen ausgestattet sind,
wobei die Struktur weiterhin Spannseile (16) einschließt, die mit einer Festziehstruktur ausgestattet sind, wobei ein Ende der Spannseile (16) an der strukturell verstärkten Öffnung (6) des Kollektors (1) befestigt ist, und das andere Ende der Spannseile (16) an Füße (8) befestigt ist.

13. Struktur gemäß Anspruch 12, **dadurch gekennzeichnet, dass** die Wasseroberfläche (15) mit geregeltem Pegel von einer Absperrung (19) mit Schleusen und Windablenk-Elementen (20) darauf umgeben ist, worin die Windablenk-Elemente (20) mit der Absperrung (19( in einer festen Art und Weise oder mittels eines sich teleskopische bewegenden Elements (21) verbunden sind.

14. Verwendung des parabolischen Kollektors (1) in Kombination mit der Struktur gemäß einem oder mehreren der Ansprüche 1-13 in einem Solarkraftwerk für die Erzeugung elektrischer Energie und/oder von Wasserstoff, der eine Energieumwandlungsund Speichereinheit (13, 26, 25) einschließt, wobei der Kollektor (1) mit der Energieumwandlungs- und Speichereinheit (13, 26, 25) verbunden ist, **dadurch gekennzeichnet, dass**
eine Wärmeempfangseinheit und die Energieumwandlungseinheit im Empfänger (7) angeordnet sind, wobei die Wärmespeichereinheit Wärmespeichertanks (25) einschließt, die in der Kalotte (2) angeordnet sind, wobei die Speichertanks (25) eine Wärmeisolierungsschicht haben, die darauf angebracht ist; oder dadurch, dass
eine Wärmeempfangseinheit im Empfänger (7) angeordnet ist, wobei die Energieumwandlungs- und die Wärmespeichereinheit in der Kalotte (2) angeordnet sind, so dass die Energieumwandlungseinheit auf einer Stützstruktur (28) angebracht ist, die mit der Kalotte (2) mittels teleskopischen, sich bewegenden Elementen (27) verbunden ist, und zwar in einem Behälter (26), der mit Dämpfern (29) ausgestattet ist, die an beiden Seiten an seiner Seite über den Schwerpunkt aufgehängt sind; oder dadurch dass
ein Wärmeempfangseinheit im Empfänger (7) befindlich ist, wobei die Energieumwandlungs- und die Wärmespeichereinheit auf einer Stützstruktur angeordnet sind, die über der Wasseroberfläche (15) in der Nähe des Kollektors (1) steht, wobei die Wärmespeichereinheit, die die Wärmespeichertanks (25) einschließt, ein Dampfgenerator (30) und die Wärmespeichertanks (25) mit dem Empfänger (7) verbunden sind, der in Brennpunkt des Kollektors (1) angebracht ist, und zwar mittels einer flexiblen Rohrleitung mit mehrfachen Isolierungen, die einen Wärmeträger zuführt.

15. Die Erfindung gemäß Anspruch 14, **dadurch gekennzeichnet, dass** die Energieumwandlungseinheit aus Luftkondensator-, Vorwärmer-, Wärmer- und Turbogeneratoreinheiten besteht.

16. Die Erfindung gemäß Anspruch 14, **dadurch gekennzeichnet, dass** die Energieumwandlungseinheit aus einer Vorrichtung besteht, die flüssiges Natrium als Übertragungsmittel verwendet, sowie Dampfgenerator- (30), Turbogenerator- (35), Kondensator-(32), Speisewasser-Zuführung- (33) und, wenn erforderlich, Wärmespeichereinheiten (25).

17. Die Erfindung gemäß Anspruch 16, **dadurch gekennzeichnet, dass** der Kondensator (32) mit einer Meereswasser-Entsalzungsausstattung verbunden ist.

18. Die Erfindung gemäß einem oder mehreren der Ansprüche 14 bis 17, **dadurch gekennzeichnet, dass** ein Wasserstofferzeugungssystem (54) parallel mit oder anstelle der Energieumwandlungseinheit betrieben wird.

19. Die Erfindung gemäß Anspruch 14, dritte Alternative, die eine Vielzahl von Kollektoren (1) einschließt, die ein Kraftwerk (53) bilden, das auf einer Wasseroberfläche (15) mit geregeltem Pegel angeordnet werden soll, und das durch eine Absperrung (19) umgeben ist, die mit Schleusen ausgestattet ist.

20. Die Erfindung gemäß Anspruch 19, dadurch gekennzeichnet, dass ein unterer Wasserbehälter (22) mit dem Kraftwerk (53) in einer Höhe verbunden ist, die unter dem Pegel des Hochwassers liegt, und die weiterhin einen oberen Wasserbehälter (23) einschließt, und zwar an einem höheren Pegel als jener der natürlichen Wasseroberfläche, wobei die oberen und die unteren Behälter (23, 22) durch Rohrleitungen mit Pumpen verbunden sind, wobei die Rohrleitungen weiterhin mit Turbinen, Generatoren und Auslassröhren ausgestattet sind.

## Revendications

1. Collecteur parabolique (1) pour concentrer l'énergie solaire comprenant un récepteur (7) en son foyer et fixé d'une manière permettant son libre mouvement dans au moins deux directions, **caractérisé en ce que**
le collecteur (1) a une double structure de coquille comprenant des champs arqués se composant d'armatures - nervures faites de nervures arquées doubles (42) reliées au moyen de parties de panneau d'espacement (50), l'espace entouré par les nervures arquées doubles (42) et les parties de panneau d'espacement (50) étant rempli d'une structure de grille multicouche (46) avec des éléments de liaison (51) fixant les couches de la structure de grille (46) entre elles.

2. Collecteur parabolique selon la revendication 1, **caractérisée en ce que** la structure de grille (46) est fermée par des éléments de cassette (49) assujettis à un orifice (47) des nervures (42) et de la structure de grille (46), tandis que les bords des éléments de cassette (49) et la surface des éléments de liaison (51) sont fermées au moyen de bandes en matière synthétique souples (48) collées d'un côté.

3. Collecteur parabolique selon la revendication 2, **caractérisé en ce que** les éléments de cassette (49) sont faits en une résine synthétique brute renforcée par un verre textile, de préférence fixé par de la colle.

4. Collecteur parabolique selon l'une ou plusieurs des revendications 1-3, **caractérisé en ce que** le collecteur (1) est recouvert de plaques réfléchissantes (45) en une partie interne, de préférence faites en résine synthétique brute renforcée par un verre textile, les plaques réfléchissantes (45) étant maintenues sur la surface interne du collecteur (1) au moyen d'unités de fixation réglables à vis à ressort à travers des alésages (44) pratiqués dans les nervures (42).

5. Collecteur parabolique selon une ou plusieurs des revendications 1-4, **caractérisé en ce que** le récepteur (7) est maintenu par des supports (8a) au foyer du collecteur (1).

6. Collecteur parabolique selon une ou plusieurs des revendications 1-5, **caractérisé en ce que** le collecteur (1) est équipé de sacs d'air (17) divisés en des volumes séparés l'un de l'autre au moyen de cloisons de séparation, des côtés extérieurs est et ouest.

7. Collecteur parabolique selon l'une ou plusieurs des revendications 1-6, **caractérisé en ce qu'**il y a un deuxième corps de rotation, de préférence un hémisphère ou une calotte (2), d'une surface plus petite par rapport au collecteur (1), la calotte (2) étant conçue d'une façon axialement symétrique à la surface externe du collecteur (1), dans lequel dans la surface entourée par le collecteur (1) et la calotte (2) il y a une structure de renforcement, un support principal télescopique (4) pouvant être raccordé à la calotte (2) dans la ligne médiane commune de la calotte (2) et du collecteur (1).

8. Structure de support et de déplacement pour un collecteur parabolique (1) selon l'une ou plusieurs des revendications 1-7, **caractérisé en ce que** la structure comprend :
une base (5);
un support principal télescopique (4) fixé à la base (5) à l'extrémité inférieure et supportant le collecteur (1) de façon unilinéaire avec son axe de rotation au moyen d'une articulation sphérique (3); et
des éléments télescopiques (12), les premières extrémités des éléments télescopiques (12) étant reliées d'une façon rotative au collecteur (1) à égale distance l'une de l'autre le long d'un anneau circulaire situé dans un plan parallèle à un orifice (6) du collecteur (1), les deuxièmes extrémités des éléments télescopiques (12) étant reliées à la base (5) également d'une façon rotative, les éléments télescopiques (12) entourant le support principal télescopique (4).

9. Structure selon la revendication 8, **caractérisée en ce que** les éléments télescopiques (12) et le support principal télescopique (4) sont actionnés de façon hydraulique.

10. Structure selon la revendication 9, **caractérisée en ce que** le support principal télescopique (4) et les éléments télescopiques (12) sont pourvus d'une unité de commande hydraulique (18) qui est reliée à un système de commande électronique.

11. Structure selon l'une ou plusieurs des revendications 1-10, **caractérisée en ce que** le collecteur (1) est disposé dans un puits situé sous le niveau du sol (9) et garni d'une coquille de béton (10), de façon que dans la position de base l'orifice (6) soit parallèle avec l'horizon et soit au-dessus du niveau du sol (9).

12. Structure selon l'une ou plusieurs des revendications 1-10, **caractérisée en ce que** le collecteur (1) est situé sur une surface d'eau (15) de niveau régulé, de façon que la base (5) soit sous la surface d'eau (15) tandis que l'orifice (6) du collecteur (1) soit au-dessus de la surface de l'eau (15) dans chaque position, les éléments télescopiques (12) et le support principal (4) étant équipés de couches en gaine et imperméables à l'eau respectives,
la structure comprenant de plus des haubans (16) équipés d'une structure de mise en tension, une extrémité des haubans (16) étant fixée à l'orifice renforcé structurellement (6) du collecteur (1), l'autre extrémité des haubans (16) étant fixée à des jambes (8).

13. Structure selon la revendication 12, **caractérisée en ce que** la surface de l'eau (15) de niveau régulé est entourée par une barrière (19) pourvue d'écluses et d'éléments déflecteurs de vent (20), dans lequel les éléments déflecteurs de vent (20) sont reliés à la barrière (19) d'une façon fixe ou au moyen d'un élément télescopique mobile (21).

14. Utilisation du collecteur parabolique (1) en combinaison avec la structure selon l'une ou plusieurs des revendications 1-13 dans une centrale solaire destinée à la production d'énergie électrique et / ou d'hydrogène comprenant une unité de conversion et de stockage d'énergie (13, 26, 25), le collecteur (1) étant relié à l'unité de conversion et de stockage d'énergie (13, 26, 25), **caractérisée en ce que**
une unité de réception de chaleur et l'unité de conversion d'énergie sont placées dans le récepteur (7), l'unité de stockage de chaleur comprenant des réservoirs de stockage de chaleur (25) situés dans la calotte (2), une couche d'isolation thermique étant disposée sur les réservoirs de stockage (25); ou **en ce que**
une unité de réception de chaleur est située dans le récepteur (7), l'unité de conversion d'énergie et l'unité de stockage de chaleur étant situées dans la calotte (2) de telle façon que l'unité de conversion d'énergie soit placée sur une structure porteuse (28) reliée à la calotte (2) au moyen d'éléments télescopiques mobiles (27) dans un réservoir (26) pourvu d'amortisseurs (29) suspendus des deux côtés en sa partie située au-dessus du centre de la gravité; ou **en ce que**
une unité de réception de chaleur est placée dans le récepteur (7), l'unité de conversion d'énergie et l'unité de stockage de chaleur étant situées sur une structure porteuse restant au-dessus de la surface de l'eau (15) à proximité du collecteur (1), l'unité de stockage de chaleur comprenant des réservoirs de stockage de chaleur (25), un générateur de vapeur (30) et les réservoirs de stockage de chaleur (25) étant reliés au récepteur (7) placé au foyer du collecteur (1) au moyen d'un conduit souple pourvu d'une isolation multiple, délivrant le produit calorifère.

15. Invention selon la revendication 14, **caractérisée en ce que** l'unité de conversion d'énergie se compose d'unités de condenseur d'air, de préchauffage, de chauffage et de turbogénérateur.

16. Invention selon la revendication 14, **caractérisée en ce que** l'unité de conversion d'énergie se compose d'un équipement utilisant le sodium liquide comme produit de transmission, d'unités de générateur de vapeur (30), de turbogénérateur (35), de condenseur (32), d'alimentation en eau (33) et, s'il y a lieu, de stockage de chaleur (25).

17. Invention selon la revendication 16, **caractérisée en ce que** le condenseur (32) est relié à un équipement de désalinisation d'eau de mer.

18. Invention selon l'une ou plusieurs des revendications 14 à 17, **caractérisé en ce qu'**un système de production d'hydrogène (54) fonctionne parallèlement à, ou au lieu de l'unité de conversion d'énergie.

19. Invention selon la revendication 14, troisième variante, comprenant une pluralité de collecteurs (1) formant une centrale énergétique (53) à placer sur la surface de l'eau (15) de niveau régulé et entourée par la barrière (19) pourvue d'écluses.

20. Invention selon la revendication 19, **caractérisée en ce qu'**un réservoir d'eau inférieur (22) est relié à la centrale énergétique (53) à une certaine hauteur sous le niveau de marée haute et comprenant de plus un réservoir d'eau supérieur (23) à un niveau supérieur à celui de la surface normale de l'eau, les réservoirs supérieur et inférieur (23, 22) étant reliés par des canalisations avec des pompes, les canalisations étant de plus pourvues de turbines, de générateurs et de conduits de sortie.
